# EUROPÄISCHE PATENTANMELDUNG

(11) **EP 4 438 190 A1**
(43) Veröffentlichungstag der Anmeldung: **02.10.2024**
(21) Anmeldenummer: 23164650.6
(22) Anmeldetag: 28.03.2023
(51) Int. Cl.: B05D 1/02, B05D 1/28, B05D 3/06, B05D 7/06, B05D 7/00, B32B 21/02, B32B 21/08, E04C 2/16, B44C 5/04, B27N 7/00, B27N 3/04

(54) **VERFAHREN ZUM HERSTELLEN EINER FARB- UND WITTERUNGSBESTÄNDIGEN PLATTE**

(71) Anmelder: SWISS KRONO Tec AG, 6004 Luzern (CH)
(72) Erfinder: Hasch, Joachim, Prof. Dr., 10317 Berlin (DE); Braun, Roger, 6130 WILLISAU (CH); Kalwa, Norbert, Dr., 32805 Horn - Bad Meinberg (DE); Moisch, Dorin, 6014 Luzern (CH)
(74) Vertreter: Kalkoff & Partner Patentanwälte mbB

(57) **Zusammenfassung**

Die Erfindung betrifft ein Verfahren zum Herstellen einer farb- und witterungsbeständigen Platte. Um eine farb- und witterungsbeständige Platte mit einer einfachen Beschichtung bereitzustellen, ist vorgesehen, dass eine wasserfeste Trägerplatte bereitgestellt wird, auf die eine erste Schicht einer Beschichtung aufgebracht wird, die ausgewählt ist aus der Gruppe umfassend Dekorpapier, Finishfolie, Lack, continuous pressure laminate (CPL) oder high pressure laminate (HPL), und auf die eine zweite Schicht einer Beschichtung aufgebracht wird, die eine Lackschicht ist. Die Erfindung umfasst weiter eine farb- und witterungsbeständige Platte.

## Beschreibung

Die Erfindung betrifft ein Verfahren zum Herstellen einer farb- und witterungsbeständigen Platte.

Witterungsbeständige Platten für Außenanwendungen sind bekannt, z. B. aus der WO 2020/211 989 A1. Die dort offenbarte Platte ist mit aufwändigen, viellagigen Beschichtungen versehen, die einen Einsatz für Außenanwendungen erlauben.

Es ist Aufgabe der Erfindung, ein Verfahren zum Herstellen einer Platte mit einfacherer Beschichtung vorzuschlagen, die witterungsbeständig und zudem möglichst farbbeständig ist.

Diese Aufgabe wird gelöst durch ein Verfahren zum Herstellen einer farb- und witterungsbeständigen Platte nach Anspruch 1 und durch eine farb- und witterungsbeständige Platte nach Anspruch 13.

Das erfindungsgemäße Verfahren zum Herstellen einer farb- und witterungsbeständigen Platte sieht eine wasserfeste Trägerplatte vor, auf die eine maximal dreischichtige Beschichtung unmittelbar oder mit einem Fixiermittel aufgebracht wird.

Eine wasserfeste Trägerplatte ist beispielsweise aus der WO 2020/211 988 A1 oder aus der WO 2020/211 989 A1 bekannt. Alternativ wird eine wasserfeste Trägerplatte eingesetzt, die wie folgt hergestellt wird:
- Bereitstellen von Fasern,
- Bereitstellen des Bindemittels,
- Bereitstellen eines elastifizierenden Zusatzes
- Auftragen des Bindemittels und des elastifizierenden Zusatzes,
- Formen des Faserkuchens aus den mit Bindemittel und elastifizierendem Mittel versehenen Fasern,
- Verpressen des Faserkuchens in einer Presse unter Aushärten des Bindemittels zum Erzeugen einer Trägerplatte, wobei
als Bindemittel 15 Gew.-% bis 35 Gew.-% Melaminharzharz oder Phenolharz und 5 Gew.-% bis 20 Gew.-% Harnstoffharz sowie 0,1 Gew.-% bis 7 Gew.-% des elastifizierenden Zusatzes, jeweils bezogen auf das Gesamtgewicht der Trägerplatte (atro), eingesetzt werden.

Zur Herstellung der wasserfesten Trägerplatte werden zunächst Fasern bereitgestellt. Es können organische oder anorganische Fasern eingesetzt werden. Natürliche Fasern, z. B. lignocellulosische Fasern, Baumwoll- oder Leinenfasern oder synthetische Fasern wie beispielsweise Fasern aus thermoplastischem Material wie Polyethylen oder Polypropylen, aber auch aus Polycarbonat, Polyacrylat, Polymethacrylat oder Polyurethan können zur Herstellung der wasserfesten Trägerplatte eingesetzt werden. Anorganische Fasern wie Carbonfasern oder Fasern aus mineralischem oder keramischem Rohstoff oder Glasfasern sind insbesondere in Mischung mit anderen Fasern geeignet zur Herstellung der wasserfesten Trägerplatte. Insbesondere können Mischungen von Fasern, insbesondere Mischungen der vorgenannten Fasern, zur Herstellung des wasserfesten Werkstoffs eingesetzt werden. Mischungen von Fasern ermöglichen das Einstellen von Eigenschaften des wasserfesten Werkstoffs, z. B. der Elastizität oder der Biegeeigenschaften, der Formstabilität, der Festigkeit, aber auch der Herstellungseigenschaften bzw. der Verarbeitbarkeit. Fasern im Sinne dieser Erfindung sind auch Faserbündel; eingeschlossen sind auch kleinere Späne, soweit deren Fasern noch weitgehend mit Bindemittel beschichtet werden können. Es wird erfindungsgemäß bevorzugt, wenn der Faseranteil der Trägerplatte unter 50 Gew.-% des Gesamtgewichts der Trägerplatte beträgt. Es wird weiter bevorzugt, wenn der Anteil lignocellulosischer Fasern unter 45 Gew.-% des gesamten Faseranteils beträgt.

Für die Herstellung der wasserfesten Trägerplatte wird Bindemittel bereitgestellt. Eingesetzt werden Melamin- oder Phenolharz einerseits und Harnstoffharz andererseits. Das eingesetzte Bindemittel weist vorzugsweise Melaminharz, typisch Melamin-Formaldehydharz auf. Alternativ zu Melaminharz oder in Mischung mit Melaminharz kann Phenolharz eingesetzt werden. Phenolharz ist zwar wasserfest, aber dunkelfarbig, und durch seinen Alkaligehalt in geringem Maße hygroskopisch. Die Erfinder haben jedoch erkannt, dass trotz der hygroskopischen Eigenschaften Phenolharz zur Herstellung einer wasserfesten Platten eingesetzt werden kann. Die einzelnen vorgenannten Harze, insbesondere Melamin-, Harnstoff- und Phenolharz können sowohl in Mischung miteinander als auch als Mischkondensate eingesetzt werden. Besonders geeignete Harze sind beispielsweise Guanaminharz, Melamin-Formaldehydharz, Melamin-Harnstoff-Formaldehydharz (MUF-Harz), aber auch Melamin-Harnstoff-Phenol-Formaldehydharz (MUPF). Ein Guanaminharz wird z. B. in der EP 0 011 049 A1 offenbart. Melaminharz und/oder Phenolharz werden erfindungsgemäß in Kombination mit Harnstoffharz eingesetzt. Erfindungsgemäß beträgt der Anteil von Melaminharz am Bindemittel 15 Gew.-% bis 35 Gew.-% bezogen auf das Gesamtgewicht der Trägerplatte (atro), insbesondere 20 Gew.-% bis 30 Gew.-%, vorteilhaft 20 Gew.-% bis 25 Gew.-%, besonders bevorzugt 15 Gew.-% bis 25 Gew.-%. Das Melaminharz kann ganz oder teilweise durch Phenolharz ersetzt werden. Der Anteil an Harnstoffharz beträgt erfindungsgemäß 5 Gew.-% bis 20 Gew.-%, vorteilhaft 5 bis 18 Gew.- %, bevorzugt 10 Gew.-% bis 18 Gew.-%, besonders bevorzugt 10 Gew.-% bis 15 Gew.-%, jeweils bezogen auf das Gesamtgewicht der Trägerplatte (atro). Die Gesamtmenge an Bindemittel, die zur Herstellung der wasserfesten Trägerplatte eingesetzt wird, beträgt bevorzugt bis zu 48 Gew.-%, besonders bevorzugt von bis zu 45 Gew.-%, vorteilhaft bis zu 43 Gew.-%, besonders vorteilhaft 25 Gew.-% bis 40 Gew.-%, jeweils bezogen auf das Gesamtgewicht der Trägerplatte (atro). Vorteilhaft werden Melaminharz bzw. Phenolharz einerseits und Harnstoffharz andererseits in einem Verhältnis von 3,5 : 1 bis 1 : 1, vorteilhaft zwischen 3 : 1 und 1 : 1, insbesondere von 2,5 : 1, bevorzugt von 2,5 - 1,5 : 1 eingesetzt. Innerhalb der vorgenannten Grenzen kann das Verhältnis zwischen Melaminharz bzw. Phenolharz einerseits und Harnstoffharz andererseits stufenlos eingestellt werden.

Vorteilhaft werden thermoplastische Bindemittel vermieden bzw. ausgeschlossen, insbesondere wird ein Einsatz von thermoplastischen Bindemitteln von mehr als 7 Gew.-% vermieden bzw. ausgeschlossen. Die erfindungsgemäße Trägerplatte ist bevorzugt frei von Halogenen (z. B. Fluor, Chlor), aber auch von Terephthalaten.

Die wasserfeste Trägerplatte kann nach einer vorteilhaften Ausführung durch den Zusatz eines Elastomers oder Thermoplasten, der als elastifizierender Zusatz eingesetzt wird, z. B. durch Zusatz von Polyvinylacetat (PVAc) oder Ethyl-Vinyl-Acetat (EVA), aber auch einer modifizierten Isocyanat-Verbindung in seinen elastischen Eigenschaften modifiziert, insbesondere verbessert werden. Acrylat oder Styrolacrylat werden bevorzugt zum Elastifizieren der wasserfesten Trägerplatte eingesetzt, insbesondere in Form eines flüssigen Zusatzes wie z. B. einer Dispersion oder Emulsion, weil sie wasserfest sind. Aber auch Glykol, z. B. Mono- oder Diethylenglykol sind zum Elastifizieren der wasserfesten Trägerplatte geeignet, ebenso wie Caprolactam, längerkettige Diole oder Triole, z. B. Glycerin und auch Polyole, Zucker, Zuckeralkohole oder Guanaminverbindungen sind als elastifizierender Zusatz geeignet. Die vorstehend genannten elastifizierenden Zusätze können jeweils für sich allein, aber auch in Mischung von zwei oder mehr der vorgenannten Komponenten eingesetzt werden. Der Zusatz von Elastomeren oder Thermoplasten reduziert die Sprödigkeit der wasserfesten Trägerplatte und verbessert deren elastische Eigenschaften, z. B. den E-Modul. Außerdem bewirkt der Zusatz von elastifizierenden Zusätzen ein besseres Planliegen der wasserfesten Trägerplatte. Der elastifizierende Zusatz wird als Feststoff berechnet anteilig bezogen auf die die Gesamtmenge der wasserfesten Trägerplatte (atro) in einer Menge von 0,1 Gew.-% bis zu 7 Gew.-%, bevorzugt von 1 Gew.-% bis 5 Gew.-%, vorteilhaft 2 Gew.-% bis 4 Gew.-% eingesetzt.

Nach einer vorteilhaften Ausführung der Erfindung wird dem Bindemittel bis zu 1 Gew.-% eines Härters zugegeben, der das Aushärten des Bindemittels, in der Regel eine chemische Reaktion wie z. B. eine Kondensationsreaktion oder eine Additionsreaktion beschleunigt. Ein typisches Beispiel für einen Härter ist Ammoniumsulfat. Weiter vorteilhaft erweist sich der Einsatz eines hydrophobierenden Mittels zur Herstellung der wasserfesten Trägerplatte gemäß der Erfindung. Verwendet werden können z. B. Paraffin oder Wachs, die, meist als Emulsion, typischerweise in Mengen von bis zu 4 Gew.-% bezogen auf das Gewicht des plattenförmigen Werkstoffs eingesetzt werden.

Optional weist die wasserfeste Trägerplatte Zuschlagstoffe auf. Füllstoffe können als ein möglicher Zuschlagstoff dazu beitragen, das Gewicht des plattenförmigen Werkstoffs zu optimieren, meist zu minimieren, im Einzelfall aber auch zu Erhöhen oder sie können dazu beitragen, die Matrixstruktur aus Bindemittel und Fasern weiter zu verbessern. Ein Zuschlagstoff oder eine Kombination aus Zuschlagstoffen können alternativ oder ergänzend dazu dienen, bestimmte Eigenschaften der Platten zu optimieren, z. B. elektrische oder thermische Leitfähigkeit, isolierende Eigenschaften oder Festigkeitseigenschaften. Ein Zuschlagstoff ersetzt in der wasserfesten Trägerplatte in der Regel Fasern. Da die wasserfeste Trägerplatte in Gegenwart von Wasser eine minimale Quellung, insbesondere eine minimierte Dickenquellung aufweisen soll, werden nicht-hygroskopische oder nicht-quellende Zuschlagstoffe bzw. Füllstoff sowie Zuschlagstoffe bzw. Füllstoffe bevorzugt, die beständig gegen Hydrolyse sind. Solche Zuschlagstoffe bzw. Füllstoffe können mineralische Partikel sein, aber auch keramische, synthetische oder Partikel aus Glas oder Metall. Beispielsweise können Calciumcarbonat (CaCOs) und/oder Schwerspat (BaSO₄) als Füllstoffe eingesetzt werden, Partikel aus Metall können zur Verbesserung der thermischen und/oder elektrischen Leitfähigkeit eingesetzt werden oder expandierte Kunststoffpartikel können zur Verminderung des Gewichts eingesetzt werden. Die Größe der Partikel ist bevorzugt nicht größer als ein Millimeter, vorzugsweise zwischen 10 µm und 800 µm. Die Partikel können eine beliebige Form aufweisen, z. B. körnig oder pulverförmig, aber auch fadenförmig. Es können auch Mischungen verschiedener Partikel eingesetzt werden, z. B. Mischungen verschiedener Materialien, Formen oder Größe. Es werden bis zu 30 Gew.-% Zuschlagstoff bezogen auf das Gesamtgewicht der wasserfesten Trägerplatte (atro) eingesetzt, besonders bevorzugt bis zu 20 Gew.-%, vorteilhaft bis zu 15 Gew.-%. Die untere Grenze der Einsatzmenge ergibt sich durch die Nachweisbarkeit eines Zuschlagstoffs bzw. Füllstoffs. Der Zuschlagstoff bzw. Füllstoff kann vor oder nach dem Auftragen des Bindemittels auf die Fasern aufgebracht werden, bevorzugt durch Sprühen oder Streuen.

Bevorzugt werden zur Herstellung der wasserfesten Trägerplatte Heißpressen eingesetzt, deren Pressbleche oder umlaufende Metallbänder auf eine vorgegebene Temperatur aufgeheizt sind. Geeignete Presstemperaturen können von 110 °C bis 250 °C, bevorzugt von 110 °C bis 180 °C, vorteilhaft von 140 °C bis 160 °C (Temperatur des Pressblechs oder Pressbandes) gewählt werden. Je dünner die Platte, desto niedriger kann die Presstemperatur gewählt werden. Alternativ kann die Pressgeschwindigkeit erhöht werden, d. h., die Pressdauer verkürzt werden. Geeignete Pressdrücke liegen beispielsweise in einem Bereich von 0,3 N/mm² bis 5,5 N/mm², insbesondere 1 N/mm² bis 3 N/mm². Die Pressdauer beträgt vorteilhaft 6 Sekunden/mm Plattendicke (im Folgenden: s/mm) bis 60 s/mm, meist 10 s/mm bis 30 s/mm, bevorzugt 20 s/mm bis 25 s/mm. Um die Pressdauer zu minimieren, kann die Temperatur innerhalb des vorgenannten Rahmens erhöht werden. Bei kontinuierlichen Pressen beträgt die Vorschubgeschwindigkeit der umlaufenden Metallbänder, zwischen denen die wasserfeste Trägerplatte durch Verpressen hergestellt wird, in Abhängigkeit von der Länge der Presse meist zwischen 250 mm/Sekunde und 400 mm/Sekunde, bevorzugt zwischen 300 mm/Sekunde und 350 mm/Sekunde.

Auf diese wasserfeste Trägerplatte, die beispielsweise Fasern und bis zu 35 Gew.-% Melaminharz oder Phenolharz und bis zu 20 Gew.-% Harnstoffharz, jeweils bezogen auf das Gesamtgewicht der Trägerplatte (atro) als Bindemittel aufweist, wird erfindungsgemäß eine Beschichtung aufgebracht, die eine erste Schicht, die ausgewählt ist aus der Gruppe umfassend Dekorpapier, Finishfolie, Lack, continuous pressure laminate (CPL) oder high pressure laminate (HPL) und eine zweite Schicht aufweist, die eine Lackschicht ist. Die Lackschicht kann in mehreren Lagen aufgetragen werden, z. B. um eine größere Schichtdicke der Lackschicht zu erreichen. Beim Auftragen einer Lackschicht in mehreren Lagen kann entweder nass-in-nass aufgetragen werden, wobei die einzelnen Lagen unmittelbar nacheinander aufgebracht werden. Alternativ kann die zuvor aufgetragene Lackschicht angeliert werden, d. h., sie kann mit Hilfe von z. B. UV-Licht oder Elektronenstrahlhärtung mindestens teilweise ausgehärtet werden.

Die Beschichtung, insbesondere deren erste Schicht, kann vorteilhaft unmittelbar oder mit Hilfe eines Fixiermittels auf die wasserfeste Trägerplatte aufgebracht werden. Typische Beispiele für das unmittelbare Aufbringen sind das Verpressen einer kunstharzhaltigen Beschichtung, z. B. eines mit Melaminharz, Phenolharz oder einem anderen Kunstharz getränkten Papiers, insbesondere eines kunstharzgetränkten Dekorpapiers, mit einer Oberfläche der Trägerplatte. Eine Beschichtung, die mit einem Fixiermittel auf der Oberfläche der Trägerplatte befestigt wird, z. B. eine erste Schicht aus CPL oder HPL oder Folie, wird häufig mit einem Klebstoff, insbesondere mit einem Schmelzklebstoff, insbesondere einem Hotmelt-Klebstoff fixiert.

Platten, insbesondere Holzwerkstoffplatten für Außenanwendungen mussten bisher möglichst wasserfest sein, um Dimensionsänderungen während der Nutzungsdauer weitgehend auszuschließen. Die erfindungsgemäß hergestellte Platte muss zusätzlich farbstabil und witterungsbeständig sein. Insbesondere die Farbbeständigkeit ist bei Außenanwendungen wichtig, weil die Platte in der Regel für Jahre der Witterung ausgesetzt ist, z. B. als Fassadenplatte oder als Außenfensterbank, für Außenkonstruktionen z. B. für Zäune, Pergolen oder Stallungen oder beim Einsatz für Außenmöblierung, z. B. als Tischplatte für Außentische. Selbst wenn die Platte selbst witterungsbeständig ist, so muss aber auch das Dekor langfristig farbstabil bleiben, um die ästhetische Anmutung der Platte möglichst gleichbleibend zu gewährleisten. Um die Witterungsbeständigkeit und die Farbechtheit der Platte zu überprüfen, wird in einem Prüfgerät gemäß DIN EN ISO 4892-2 11/2021, gemäß Verfahren A für 3000 Stunden das Witterungsverhalten der beschichteten Platte geprüft. Die Farbbeständigkeit wird im Zusammenhang mit dieser Erfindung gemäß ISO 105 A02, A03, A04 bzw. A05 geprüft. Insbesondere wird bei der Farbechtheitsprüfung gemäß ISO 105 ein Graumaßstab zur Bewertung des Ausblutens der Farbe (A02) bzw. ein Graumaßstab zur Änderung der Farbe (A03) geprüft.

Das Aufbringen der Beschichtung, insbesondere der zweiten Schicht der Beschichtung, eines Primers aber auch eines Fixiermittels kann erfolgen durch Pressen, Walzen, Rakeln, Sprühen und/oder Gießen, wobei das Pressen vorzugsweise für kunstharzgetränktes Papier oder Folien geeignet ist, insbesondere für mit Lack beschichtetes Papier oder mit Lack beschichtete Finishfolie.

Um die erste oder die zweite Schicht aus Lack besser am Untergrund fixieren zu können, wird bevorzugt ein Primer aufgetragen, der sowohl am Untergrund, hier der Oberfläche der Trägerplatte, dem Dekorpapier, der Finishfolie, dem continuous pressure laminate (CPL) oder dem high pressure laminate (HPL) gut haftet als auch eine gute Bindung zum Lack der ersten oder insbesondere der zweiten Schicht aus Lack aufbaut. Als Primer werden beispielsweise Acrylatverbindungen eingesetzt, die bevorzugt UV-härtend sind. Der Primer wird vorteilhaft in einer Menge von bis zu 25 g/m² auf den jeweiligen Untergrund aufgetragen und mindestens teilweise ausgehärtet. Der Primer wird in der Regel flüssig aufgetragen. Der Primer trägt dazu bei, eine gut haftende erste bzw. zweite Schicht der Beschichtung zu gewährleisten. Dies wird dadurch gefördert, dass bevorzugt Primer und Lack nass-in-nass aufgetragen werden; es wird also nach dem Auftragen des Primers nicht getrocknet.

Eine besonders einfache und im Hinblick auf die Farbbeständigkeit wirksame Beschichtung einer Trägerplatte sieht vor, einen Primer auf die Oberfläche der Trägerplatte aufzubringen, der das Haften von Lack auf der Oberfläche der Trägerplatte verbessert. Der Primer hat vorzugsweise keinen Einfluss auf die Farb- und/oder Witterungsbeständigkeit der erfindungsgemäßen Platte. Auf den Primer können dann eine erste Schicht eines Lacks und eine zweite Schicht eines Lacks, insbesondere eines UV-härtenden oder elektronenstrahlhärtenden Lacks (eines ESH-Lacks) aufgebracht werden. Bevorzugt wird insgesamt bis zu 150 g/m² Lack auf die Oberfläche der Trägerplatte aufgebracht. Die erste Schicht und die zweite Schicht können denselben oder unterschiedliche Lacke bzw. Lackzusammensetzungen aufweisen. Das Aushärten des Lacks, also das Polymerisieren der Lackmoleküle, sowie das Aushärten des Primers erfolgt vorzugsweise mindestens teilweise nach dem Aufbringen des Primers bzw. einer jeden Schicht Lack. Besonders bevorzugt erfolgt das vollständige Aushärten nach dem Auftragen einer jeden Schicht.

Insbesondere das Aufbringen von zwei Schichten Lack ermöglicht eine sparsame Beschichtung der wasserfesten Platte, die trotzdem in der optischen bzw. technischen Gestaltung viele Varianten eröffnet, indem Pigmente und Additive, die die Lackeigenschaften wesentlich mitbestimmen, optimal eingesetzt werden können. So kann z. B. eine farbige untere Lackschicht von einer mit Metallpartikeln versetzten oberen Lackschicht überdeckt werden, um besondere ästhetische Effekte zu erzeugen oder eine untere mit Anti-Fungiziden versetzte Lackschicht kann von einer oberen, mit leitfähigen Partikeln versetzten Lackschicht abgedeckt werden, um technischen Anforderungen wie z. B. Farb- und/oder Witterungsbeständigkeit, Abriebfestigkeit, Leitfähigkeit zu genügen.

Nach einer alternativen Ausführung des erfindungsgemäßen Verfahrens wird ein kunstharzgetränktes Papier, insbesondere ein Dekorpapier, auf die Trägerplatte aufgebracht, wobei das kunstharzgetränkte Dekorpapier als erste Schicht der Beschichtung optional mit einem Primer und erfindungsgemäß mit einer zweiten Schicht aus Lack versehen ist. Das Papier, beispielsweise mit einem Papiergewicht von 15 g/m² bis 250 g/m², kann ein neutrales oder ein mit einem Dekor versehenes Papier sein. Es wird mit einem Kunstharz, meist einem Melaminharz, getränkt, so dass typisch ein Papiergewicht von 150 g/m² bis 400 g/m² für das mit Kunstharz getränkte Papier erreicht wird. Nach dem Tränken, das meist in einem Tränkbad erfolgt, wird überschüssiges Kunstharz abgestreift und das mit der vorgegebenen Menge an Kunstharz getränkte Papier wird getrocknet, so dass das Kunstharz nicht mehr klebt, aber noch reaktiv ist, d. h., dass das Kunstharz noch nicht das vollständige Polymergerüst ausgebildet hat. Das Kunstharz kann das Papier teilweise durchdringen. Es kann aber auch auf einer oder beiden Seiten des Papiers überstehen, wenn ein Überschuss an Kunstharz auf das Papier aufgebracht wird. Auf das getrocknete, kunstharzgetränkte Papier wird optional eine Schicht eines Primers aufgetragen. Der Primer dient dazu, die nachfolgende Lackschicht optimal an das kunstharzgetränkte Papier anzubinden. Nach dem Auftragen wird der Primer vorteilhaft mindestens teilweise getrocknet. Diese Beschichtung ist für Innenanwendungen bekannt und bewährt; es ist jedoch überraschend, dass sie auch für Außenanwendungen ausreichend farb- und witterungsbeständig ist.

Auf das kunstharzgetränkte und mit einem Primer versehene Papier wird bevorzugt eine Schicht Lack aufgetragen, insbesondere ein UV-härtender oder elektronenstrahlhärtender Lack. Vorteilhaft werden maximal 50 g/m² Lack aufgetragen.

Das kunstharzgetränkte Papier wird auf die Trägerplatte aufgelegt, wobei die mit der Lackschicht versehene Seite von der Trägerplatte weg weist, anschließend wird das kunstharzgetränkte Papier unmittelbar mit der Trägerplatte verpresst.

Die einzelnen Kunstharzschichten werden vorteilhaft z. B. mittels Heißluft oder IR-Strahlung zwischengetrocknet bis auf einen Feuchtegehalt von 5% bis 25%, bevorzugt von 4% bis 10%. Sie erreichen dann den sogenannten B-Zustand, in dem die Kunstharze meist nicht mehr klebrig aber noch reaktiv sind. Anschließend wird die vollständig aufgetragene Kunstharzbeschichtung in einer Presse, z. B. einer Kurztaktpresse, unter Einwirkung von Druck und erhöhter Temperatur ausgehärtet. Typische Pressbedingungen umfassen eine Temperatur von 160 °C bis 220 °C, bevorzugt von 180 °C bis 200 °C, einen Pressdruck von 20 kg/cm² bis 50 kg/cm², bevorzugt von 22 kg/cm² bis 40 kg/cm² und eine Presszeit von 5 Sekunden bis 60 Sekunden, bevorzugt von 5 Sekunden bis 30 Sekunden.

Diese Ausführung der Erfindung ist in vorhandenen Anlagen einfach herzustellen und besonders widerstandsfähig gegenüber Witterungseinflüssen. Die Farbe, die z. B. durch ein Dekorpapier oder den Lack eingebracht wird, bleibt stabil auch wenn die Platte der Witterung ausgesetzt ist.

Eine weitere Ausführungsform der Erfindung sieht vor, dass statt des kunstharzgetränkten Papiers eine Finishfolie eingesetzt wird, die vor dem Aufbringen auf die Trägerplatte mit einer Schicht eines Primers und anschließend mit einer Schicht eines Lacks beschichtet wird. Das Aufbringen und Trocknen von Primer und Lack erfolgt wie vorstehend beschrieben. Anders als das kunstharzgetränkte Papier wird die Finishfolie üblicherweise mit einem Fixiermittel auf die Trägerplatte aufgebracht. Das Fixiermittel, bevorzugt ein Schmelzkleber bzw. ein Hotmelt, wird auf die Trägerplatte oder die Finishfolie aufgebracht und Trägerfolie und Finishfolie werden unter Einwirkung von Druck in einer Presse, z. B. einer Vakuumpresse, dauerhaft miteinander verbunden.

Schließlich kann die Gebrauchstüchtigkeit der Oberfläche des erfindungsgemäßen Werkstücks dadurch verbessert werden, dass eine Kaschierung aufgebracht wird. Die Kaschierung weist eine Beschichtung mit meist gebrauchsfertiger Außenseite auf, die in der Regel auf den erfindungsgemäßen Werkstoff aufgeklebt wird, z. B. wie vorstehend beschrieben, mittels eines Hotmelts oder mittels eines anderen Klebstoffs. Eine typische Ausführung einer Kaschierung ist ein CPL oder HPL, das z. B. aus einer Mehrzahl von kunstharzimprägnierten Papieren besteht, wobei die kunstharzimprägnierten Papiere oder Folien unter vollständigem Aushärten des Kunstharzes bereits miteinander verpresst wird. Aber auch PVC-Folien können aufkaschiert werden. Das CPL oder HPL oder auch andere Beschichtungen mit gebrauchsfertiger Oberfläche wie PVC-Folie werden typisch mit einem Hotmelt als Klebstoff auf die Oberfläche des plattenförmigen Werkstücks aufgebracht. Das Aufpressen der Kaschierung erfolgt z. B. bei 80 °C bis 200 °C in einer Kaschierpresse bei einem Druck von bis zu 300 N/cm². Die Pressdauer ist kurz und liegt meist bei maximal 1 Sekunde. Kaschieranlagen sind meist als Kalanderanlagen ausgebildet.

Wenn auch die Oberfläche einer Kaschierung an sich bereits gebrauchsfertig ist, so schließt dies nicht aus, dass eine weitere Beschichtung oder Versiegelung aufgebracht wird, sei es aus ästhetischen Gründen oder zur weiteren Verbesserung der Gebrauchstüchtigkeit. Typisch ist z. B. das Aufbringen eines Lacks als zweiter Schicht, sei es, um z. B. besondere optische Effekte zu erzielen oder weil beispielsweise mindestens eine Lackschicht Korund für die Verbesserung der Abriebfestigkeit oder, um die Kratzfestigkeit weiter zu verbessern, Aerosile enthält. Die zweite Schicht kann bei der Kaschierung, aber auch auf die anderen vorstehend genannten ersten Schichten der Beschichtung aus mehreren Lagen von Lack aufgebaut sein, die nacheinander aufgetragen werden. Die einzelnen Lagen von Lack können jeweils vollständig ausgehärtet werden, bevor die nachfolgende Lage Lack aufgetragen wird, oder sie ist nicht oder teilweise ausgehärtet. Die einzelnen Lagen können aus demselben Lack oder aus verschiedenen Lacken bzw. Lackzusammensetzungen hergestellt sein.

Vorteilhaft kann die zweite Schicht der Beschichtung zunächst auf die erste Schicht aufgebracht und ggf. ausgehärtet werden, bevor dann die miteinander verbundenen ersten und zweiten Schichten auf die Trägerplatte aufgebracht werden können. Es wird also eine Beschichtung auf die Trägerplatte aufgebracht, bei der ein Dekorpapier, eine Finishfolie oder ein CPL bzw. HPL bereits jeweils mit einer Schicht Lack beschichtet sind.

Optional kann eine Struktur die zweite Schicht der Beschichtung eingeprägt werden, bevorzugt bevor oder während diese ausgehärtet wird. Die Struktur kann insbesondere natürliche Strukturen von Holz oder Gestein nachahmen, sie kann aber auch Gebrauchsspuren oder Fertigungssputen von z. B. Holz- oder Steinstrukturen nachahmen.

Die Merkmale der ersten bzw. der zweiten Schicht, die vorstehend erläutert wurden, können beliebig miteinander kombiniert werden.

Im Zusammenhang mit dieser Erfindung beziehen sich alle %-Angaben, wenn nicht anders angegeben, auf Gewichtsprozent (Gew.-%). Alle Mengenangaben, z. B. "g/m²", insbesondere bei Lack oder Primer, beziehen sich, wenn nicht anders angegeben, auf 100 % Feststoff. Tatsächlich werden insbesondere flüssig aufgetragene Lacke oder Primer gemäß Vorgabe der Hersteller bei deutlich niedrigeren Feststoffgehalten von typisch 40 Gew.-% bis 60 Gew.-% verarbeitet. Die Angabe "atro" bezieht sich auf Fasern, die bei 105 °C bis zur Gewichtskonstanz getrocknet wurden.

Details der Erfindung werden nachfolgend an Hand von Ausführungsbeispielen erläutert:
Die Trägerplatte ist eine wasserfeste Platte, die z. B. nach den vorstehend genannten Bestandteilen (Fasern, Bindemittel bzw. Klebstoff, elastifizierender Zusatz, Härter, Hydrophobierungsmittel und/oder Füllstoff) zusammengesetzt sein kann. Für die nachfolgenden Ausführungsbeispiele wird eine hier konkret z. B. eine Corepel-Platte als wasserfeste Trägerplatte eingesetzt, die folgende Zusammensetzung aufweist: 30 Gew.- % Melaminharz, 15 Gew.-% Harnstoffharz, 4 Gew.-% Diethylenglykol als elastifizierender Zusatz, 0,5 Gew.-% Ammoniumsulfat als Härter, 15 Gew.-% Calciumcarbonat als Füllstoff und 33 Gew.-% atro Fasern. Die Corepel-Platte wird bei 180 °C Preßtemperatur und 4 N/mm² Preßdruck für 6 s/mm Plattendicke verpresst, für die Ausführungsbeispiele 1 bis 3 zu einer 8 mm Platte und für das Ausführungsbeispiel 4 zu einer 10 mm Platte. Die Platte wird anschließend geschliffen und dann gemäß der nachfolgenden Ausführungsbeispiele beschichtet.

### Ausführungsbeispiel 1:

Eine wasserfeste Platte, hier z. B. eine geschliffene 8 mm Corepel-Platte (Format: 2800 × 1000 mm) wird auf einer Lackierlinie, die mit einer Geschwindigkeit von 30 m/min betrieben wird, zunächst mit einem UV-Primer, z. B. einem Acrylat-Primer, der mit UV-Licht aushärtbar ist, in einer Menge von 1 - 20 g/m² mit Hilfe einer Lackwalze beschichtet. Er wird mit einer Galliumlampe mit 80 Watt/cm² angeliert, d. h. mindestens teilweise ausgehärtet. In einer alternativen Ausführung kann auf den Primer verzichtet werden. Danach wird mit einer Gießmaschine ein pigmentierter ESH-Lack (Elektronenstrahl härtender Lack), hier ein Urethanacrylat-Lack, in einer Menge von ca. 100 g/m² appliziert. Der Lack enthielt ca. 15 % Pigment (Weiß) und wird in diesem Ausführungsbeispiel vorzugsweise mit Reaktivverdünner auf eine Viskosität von 70 - 80 sec (4 mm DIN-Becher) eingestellt. Als Reaktivverdünner werden vorzugsweise Hexandioldiacrylat und Trimethylolpropantriacrylat eingesetzt. Der Lack wird mit einem Elektronenstahler angeliert (225 V, 100 kGray). Alle Lackhärtungen mit Hilfe von Elektronenstrahlern, die im Zusammenhang mit dieser Erfindung angesprochen werden, werden vorzugsweise unter Inertgasatmosphäre, z. B. unter Stickstoffatmosphäre, durchgeführt. Alternativ kann ein UV-härtender Lack eingesetzt werden.

Danach wird mit einem Walzenaggegat ein Nanopartikel enthaltender Decklack, z. B. ein Acrylatlack aufgetragen, der pyrogene Kieselsäure enthält. Der Lack wird in einer Menge von ca. 10 - 20 g/m² aufgebracht. Danach wird der Gesamtaufbau wiederum mit einem Elektronenstrahler durchgehärtet (225 V, 250 kGray). Alternativ kann auch ein UV-härtender Polyurethanlack eingesetzt werden. Die lackierten Platten werden nach dem Auskühlen in einer Profilline auf Format geschnitten. Ein Muster aus dieser Fertigung wird dann gemäß der DIN EN ISO 4892-2, 11/2021, Verfahren A 3000 h geprüft. Nach der Prüfung waren keine Farbabweichungen oder andere Mängel erkennbar (Graumassstabbewertung: 4-5, ISO 105 A2, A3). Damit ist die vorstehend beschriebene Beschichtung ausgezeichnet für den Einsatz im Außenbereich, z. B. als Fassadenplatte geeignet. Die erfindungsgemäß beschichtete wasserfeste Platte erweist sich zudem als säurefest und kratzfest.

### Ausführungsbeispiel 2:

Ein Dekorpapier (80 g/m², Breite der Rolle: 2070) wird in einem Imprägnierkanal mit ca.80 g Melaminharz / m² (berechnet als 100 Gew.-% Feststoff) imprägniert. Der Imprägnierkanal wird dabei mit einer Geschwindigkeit von 30 m/min betrieben. Dabei wird das Papier in der Tränkwanne mit Harz imprägniert und vorzugsweise wird die Oberseite vor dem Schwebetrockner mit einem Messerrakel scharf abgezogen. Im Trockenkanal wird das Imprägnat auf eine Restfeuchte von 5 Gew.-% bis 10 Gew.-%, typisch ca. 6 Gew.-% bis 8 Gew.-% getrocknet. Das Papier wird nach dem Schwebetrockner zunächst mit einer Lackwalze mit einem UV-Primer in einer Menge von 15 - 20 g/m² beschichtet. Er wird mit einer Galliumlampe mit 80 Watt/cm² angeliert. Danach wird ein ESH-Lack mit Hilfe einer Lackwalze auf die Oberseite des Dekorpapiers aufgetragen (Lack aus Beispiel 1). Die Menge lag bei 40 -50 g/m². Der Lackauftrag kann auch in zwei Lagen mit je 20 - 25 g/m² erfolgen, entweder nass-in-nass oder mit angelieren der ersten Lage. Der vollständige Lackauftrag wird dann mit einem ESH-Strahler durchgehärtet (225 V, 100 kGray). Die Lackhärtung erfolgt unter Inertgas, z. B. Stickstoff. Die Imprägnate werden anschließend auf Format geschnitten (2800 × 2070 mm). Sie werden danach in einer Kurztaktpresse beidseitig auf eine wasserfeste Platte, hier z. B. auf eine 8 mm Corepel-Platte aufgepresst. Die Pressparameter waren: eine Preßtemperatur von 180°C, ein Druck von 40 N/cm² und eine Pressdauer von 20 Sekunden.

Aus der so beschichteten, großformatigen Platte wird ein Muster für eine Bewitterungsprüfung geschnitten und analog wie das Muster aus Beispiel 1 geprüft. Auch hier werden keine Farbveränderungen oder andere Mängel festgestellt (Graumassstabbewertung: 4-5, ISO 105 A2, A3).

### Ausführungsbeispiel 3:

Ein Dekorpapier mit einem Papiergewicht von 80 g/m² und einer Breite der Rolle: von 2070 mm wird in einem Imprägnierkanal mit ca. 80 g Melaminharz/m² (bezogen auf 100 Gew.-% Feststoff) imprägniert. Der Imprägnierkanal wird dabei mit einer Geschwindigkeit von 30 m/min betrieben. Dabei wird das Papier in der Tränkwanne mit Harz imprägniert und vorzugsweise vor dem Schwebetrockner die Oberseite mit einem Messerrakel scharf abgezogen. Im Trockenkanal wird das Imprägnat auf eine Restfeuchte von ca. 6% getrocknet.

Das Papier wird nach dem Schwebetrockner zunächst mit einer Lackwalze mit einem UV-härtenden Primer in einer Menge von 15 - 20 g/m² beschichtet. Er wird mit einer Galliumlampe mit 80 Watt/cm² angeliert, aber nicht vollständig durchgehärtet. Danach wird ein UV-Lack, vorzugsweise ein Acrylatlack, mit Hilfe einer Lackwalze auf die Oberseite des Dekorpapiers aufgetragen. Die Menge lag bei 20 -30 g/m². Der Lackaufbau (Primer und Lack) wird dann mit einem UV-Strahler durchgehärtet (Hg, 120 Watt/cm). Die Lackhärtung erfolgt unter Inertgas, z. B. Stickstoff. Der Lack ist vorteilhaft mit Photoinitiatoren versetzt, die die Farbstabilität fördern.

Die Imprägnate werden anschließend auf Format geschnitten (2800 × 2070 mm). Sie werden danach in einer Kurztaktpresse beidseitig auf eine wasserfeste Platte, z. B. auf eine 8 mm Corepel-Platten aufgepresst. Die Pressparameter sind identisch mit den Preßbedingungen des Ausführungsbeispiels 2.

Aus einer wie vorstehend beschrieben beschichteten, großformatigen Platte wird ein Muster für eine Bewitterungsprüfung geschnitten und analog wie das Muster aus Beispiel 1 geprüft. Auch hier werden keine Farbveränderungen oder andere Mängel festgestellt (Graumassstabbewertung: 4-5, ISO 105 A2, A3).

### Ausführungsbeispiel 4:

Eine Finishfolie, also ein mit Kunstharz imprägniertes Papier, bei dem das Kunstharz im Unterschied zum Dekorpapier ausgehärtet ist, wird zur Beschichtung einer wasserfesten Platte, typisch der vorstehend beschriebenen wasserfesten Platte, eingesetzt. Die Finishfolie (Breite: 1300 mm) weist ein Papiergewicht von 80 g/m² auf und ist mit 100 g/m² bis 120 g/m² Kunstharz imprägniert. Üblicherweise wird hier Harnstoffharz oder eine Mischung aus Harnstoffharz und Acrylharz eingesetzt, es kann aber auch ein anderes, vorzugsweise duroplastisches Kunstharz oder eine Mischung von Kunstharzen eingesetzt werden. Die Finishfolie in einem Unidekor, hier in der Farbe grau, die in einem ersten Schritt mit einem Gemisch aus einem Acrylat- und einem Harnstoffharz imprägniert worden war, wird in einer Lackierstraße auf der Oberseite zunächst mit einer Lackwalze mit einem UV-Primer in einer Menge von 15 - 20 g/m² beschichtet. Die Lacklinie wird mit 30 m/min betrieben. Der Primer wird mit einer Galliumlampe mit 80 Watt/cm² angeliert. Danach wird ein ESH-Lack mit Hilfe einer Lackwalze auf die Oberseite der Finishfolie aufgetragen. Hierzu wird der Lack aus dem Ausführungsbeispiel 1 verwendet. Die eingesetzte Menge liegt bei 40 -50 g/m²; sie kann -wie im Ausführungsbeispiel 1 beschrieben, in ein oder mehr Lagen aufgetragen werden. Der Lackaufbau aus Primer und Lack wird dann mit einem ESH-Strahler durchgehärtet (225 V, 100 kGray). Die Aushärtung mit Hilfe des Elektronenstrahlers erfolgt unter Schutzgasatmosphäre, z. B. Stickstoff.

Die lackierte Finishfolie wird dann mit Hilfe eines PU-Hotmelt (Auftragsmenge: 100 g/m²) in einer Kaschierlinie auf die Oberseite eine Corepel-Platte von 10 mm Dicke aufkaschiert. Auf der Rückseite der Corepel-Platte wird die gleiche lackierte Finishfolie aufkaschiert. Aus einer großformatigen Platte wird ein Muster für eine Bewitterungsprüfung geschnitten und analog wie das Muster aus Beispiel 1 geprüft. Auch hier werden keine Farbveränderungen oder andere Mängel festgestellt (Graumassstabbewertung: 4-5, ISO 105 A2, A3).

### Ausführungsbeispiel 5

Eine wasserfeste Platte, z. B. so wie vorstehend beschrieben, wird nach einer ersten Alternative entweder lackiert oder mit einem Primer beschichtet. Es eignen sich z. B. UV-härtende Primer oder Lacke, beispielsweise auf Acrylatbasis, oder elektronenstrahlhärtende Primer oder Lacke. Auf diese erste Lackschicht oder den Primer wird mindestens abschnittsweise ein Dekor aufgedruckt. Das Dekor wird bevorzugt digital aufgetragen, z. B. mittels eines Tintenstrahldruckers. Nach einer zweiten Alternative wird ein Dekor mindestens abschnittsweise direkt auf die z. B. geschliffene und entstaubte Oberfläche der wasserfesten Platte aufgedruckt und, sofern mit einer UV-härtenden Farbe gedruckt wurde, wird diese unmittelbar nach dem Auftrag des Dekors ausgehärtet. Auf die nach der ersten oder zweiten Alternative mindestens abschnittsweise mit einem Dekor versehene erste Lackschicht wird eine zweite Lackschicht aufgetragen. Aufgetragen werden z. B. 8 g/m² bis 150 g/m², typisch 15 g/m² eines Acrylatlacks. Als Lack wird bevorzugt ein UV- oder elektronenstrahlhärtender Lack eingesetzt, typisch in einer Menge von bis zu 150g/m². Vorteilhaft wird die erste Lackschicht vor dem Auftragen des Dekors mindestens teilweise getrocknet oder gehärtet, typisch angeliert, um das Auftragen eines präzisen Dekors zu ermöglichen. Nach dem Auftragen der zweiten Lackschicht, die z. B. in einer Menge von 8g/m² aufgetragen wird, werden die Lackschichten ausgehärtet. Die erste und oder die zweite Lackschicht können in einer oder in mehreren Lagen aufgetragen werden, entweder nass-in-nass oder nach angelieren der zuvor aufgetragenen Lage. Optional kann eine Struktur in den Lack, insbesondere in die zweite Lackschicht eingeprägt werden, vorzugsweise bevor oder während diese ausgehärtet wird.

Aus der mit zwei Lackschichten versehenen Platte wird ein Muster für eine Bewitterungsprüfung geschnitten und analog wie das Muster aus Beispiel 1 geprüft. Auch hier werden keine Farbveränderungen oder andere Mängel festgestellt (Graumassstabbewertung: 4-5, ISO 105 A2, A3).

### Ausführungsbeispiel 6

Auf eine wasserfeste Platte, z. B. eine 8 mm Corepel-Platte wird ein Papier oder eine Kunststofffolie aufkaschiert. Das Papier, z. B. ein Papier mit einem Blattgewicht zwischen 60g/m² und 100 g/m² oder die Kunststofffolie, z. B. aus Polyethylen, ist optional mit einem Dekor, insbesondere mit einem digital, z. B. mittels Tintenstrahldrucker aufgetragenen Dekor versehen. Das Papier oder die Kunststofffolie wird auf die wasserfeste Platte aufgeklebt bzw. -kaschiert, z. B. mit einem Hotmelt-Klebstoff. Vor oder nach dem Aufbringen auf die wasserfeste Platte wird das Papier oder die Kunststofffolie mit einer Schicht eines Lacks versehen vorzugsweise mit einen UV- oder elektronenstrahlhärtenden Lack, z. B. einem Acryllack. Der Lack wird vorteilhaft in einer Menge von bis zu 150 g/m² in einer oder mehreren Lagen aufgetragen und ausgehärtet. Optional kann eine Struktur in den Lack eingeprägt werden, vorzugsweise bevor oder während der Lack aushärtet.

## Patentansprüche

1. Verfahren zum Herstellen einer farb- und witterungsbeständigen Platte, mit einer wasserfesten Trägerplatte, aufweisend lignocellulosische Fasern, mit einer Beschichtung, wobei die Beschichtung als eine erste Schicht, die ausgewählt ist aus der Gruppe umfassend Dekorpapier, Finishfolie, Lack, continuous pressure laminate (CPL) oder high pressure laminate (HPL), und als eine zweite Schicht aufgetragen wird, wobei die zweite Schicht eine Lackschicht ist.

2. Verfahren nach Anspruch 1, **dadurch gekennzeichnet, dass** die Beschichtung durch Pressen, Walzen, Rakeln, Sprühen und /oder Gießen aufgebracht wird.

3. Verfahren nach einem der Ansprüche 1 oder 2, **dadurch gekennzeichnet, dass** vor dem Auftragen von Lack ein Primer auf die Trägerplatte, das Dekorpapier, die Finishfolie, das CPL oder das HPL aufgetragen wird.

4. Verfahren nach Anspruch 1 einem der Ansprüche 1 bis 3, **dadurch gekennzeichnet, dass** die zweite Schicht aus zwei oder mehr Lagen Lack aufgebaut wird.

5. Verfahren nach Anspruch 4, **dadurch gekennzeichnet, dass** als Lack ein UV-härtender oder ein elektronenstrahlhärtender Lack ausgewählt wird.

6. Verfahren nach Anspruch 4 oder 5, **dadurch gekennzeichnet, dass** maximal 150 g/m² Lack aufgebracht werden.

7. Verfahren nach einem der Ansprüche 1 bis 3, **dadurch gekennzeichnet, dass** ein kunstharzgetränktes Papier, insbesondere ein kunstharzgetränktes Dekorpapier, auf die Trägerplatte aufgebracht wird.

8. Verfahren nach Anspruch 7, **dadurch gekennzeichnet, dass** das mit Lack beschichtete, kunstharzgetränkte Papier unmittelbar auf die Trägerplatte aufgebracht wird, insbesondere mit der Trägerplatte verpresst wird.

9. Verfahren nach Anspruch 7 oder 8, **dadurch gekennzeichnet, dass** maximal 50 g/m² Lack für die zweite Schicht eingesetzt werden.

10. Verfahren nach Anspruch 1, **dadurch gekennzeichnet, dass** eine Finishfolie, ein CPL oder ein HPL, die bereits jeweils einer zweiten Schicht aus Lack beschichtet ist, auf die Trägerplatte aufgebracht wird.

11. Verfahren nach Anspruch 10, **dadurch gekennzeichnet, dass** die Finishfolie, das CPL oder das HPL jeweils mit einem Fixiermittel auf die Trägerplatte aufgebracht wird.

12. Verfahren nach Anspruch 10, **dadurch gekennzeichnet, dass** ein Schmelzklebstoff oder ein Hotmelt-Klebstoff als Fixiermittel eingesetzt wird.

13. Farb- und witterungsbeständige Platte, aufweisend eine wasserfeste Trägerplatte, auf die eine Beschichtung aufgebracht ist, wobei die Beschichtung eine erste Schicht, die ausgewählt ist aus der Gruppe umfassend Dekorpapier, Finishfolie, Lack, continuous pressure laminate (CPL) oder high pressure laminate (HPL), und eine zweite Schicht umfasst, wobei die zweite Schicht eine Lackschicht ist.

14. Platte nach Anspruch 13, **dadurch gekennzeichnet, dass** ein Primer auf der Trägerplatte, dem Dekorpapier, der Finishfolie, dem Lack, dem continuous pressure laminate (CPL) oder dem high pressure laminate (HPL) aufgebracht ist.

15. Platte nach Anspruch 13 oder 14, **dadurch gekennzeichnet, dass** Trägerplatte und Finishfolie, continuous pressure laminate (CPL) oder high pressure laminate (HPL) durch ein Fixiermittel miteinander verbunden sind.
